# EUROPÄISCHE PATENTSCHRIFT

(11) **EP 2 514 662 B1**
(45) Veröffentlichungstag und Bekanntmachung des Hinweises auf die Patenterteilung: **03.12.2014**
(21) Anmeldenummer: 12002071.4
(22) Anmeldetag: 20.03.2012
(51) Int. Cl.: B62K 23/04, B62K 21/26, B62K 21/12

(54) **Drehgriff mit aufschnappbarem Endstück**
Rotary handle with clip-on end piece
Poignée tournante avec extrémité encliquetable

(30) Priorität: 19.04.2011 DE 102011018163
(43) Veröffentlichungstag der Anmeldung: 24.10.2012
(73) Patentinhaber: SRAM Deutschland GmbH, 97424 Schweinfurt (DE)
(72) Erfinder: Weiss, Martin, 97424 Schweinfurt (DE)

(56) Entgegenhaltungen:
- EP-A2- 1 157 919
- CN-Y- 201 040 572
- CN-Y- 201 046 748
- DE-A- 19 904 955
- DE-C- 805 242
- DE-U1-202008 011 887
- JP-A- 10 297 571
- JP-A- 2001 213 378
- US-A- 5 315 891
- US-A- 5 802 927

## Beschreibung

Die vorliegende Erfindung betrifft einen integrierten Drehgriffschalter zum Schalten von Fahrradgetrieben, wie Mehrgangnaben oder Kettenschaltungen, gemäß dem Oberbegriff des Anspruches 1.

Mit der EP 0 700 827 ist ein Drehgriffschalter zur Steuerung von Fahrradgetrieben bekannt geworden. Dieser Drehgriffschalter besteht aus einem Schaltergehäuse mit Schaltmechanik, aus einer Klemmvorrichtung zur Fixierung am Lenker, aus einer drehbaren Aufwickelspule, einem Lagerrohr auf dem ein Drehgriffteil drehbar gelagert ist, und aus einem drehfest auf dem Lenker sitzenden Griffendstück. Das separate Griffendstück ist in der Regel eine Elastomer-Röhre, die reibschlüssig am Lenker angebracht ist, und im Wesentlichen die Handabstützkräfte auf den Lenker überträgt und die - anders als bei Drehgriffschaltern ohne zusätzliches Festgriffteil - unbeabsichtigte Schaltvorgänge verhindert. Zur Reduzierung der Reibung kann zwischen dem drehbaren Drehgriffteil und der feststehenden Elastomer-Röhre noch ein Kunststoff-Zwischenring angeordnet sein.

Bei einer Weiterentwicklung des Drehgriffschalters wurde in der gattungsbildenden EP 1 157 919 ein Festgriffteil bzw. Griffendstück eines Drehgriffschalters gezeigt, das einstückig mit dem Lagerrohr ausgebildet ist. Beim Fixieren von Lagerrohr und Schaltergehäuse am Lenkerrohr mittels einer Schraube in einer Klemmschelle wird auch das Griffendstück gegenüber dem Lenkerrohr festgelegt. Damit wird ein ungewolltes Verschieben des Griffendstückes bis hin zu einem möglichen Abrutschen vom Lenker vermieden und die Sicherheit bei der Benutzung erhöht. Das einstückig mit dem Schaltergehäuse verbundene Festgriffteil weist eine entsprechende Länge in axialer Richtung auf. Damit ergeben sich entsprechende Anforderungen an die Größe von Spritzgussmaschinen, die für die Herstellung des Schalters in Frage kommen, was nachteilig ist.

Die vorliegende Erfindung hat sich deshalb zum Ziel gemacht, Lagerrohr und Festgriffteil eines Drehgriffschalters so montierbar und demontierbar zu gestalten, dass sie sowohl im am Lenkerrohr montierten Zustand sicher miteinander verbunden sind, aber dennoch auch einzeln hergestellt und gehandhabt werden können. Dieses Ziel wird erfindungsgemäß durch den integrierten Drehgriffschalter gemäß Anspruch 1 erreicht. Wird die Schraube an der Klemmschelle angezogen, so ist ein sicherer Sitz des Drehgriffschalters inklusive Festgriffteil am Lenker gewährleistet. Es entfällt damit auch wie beim Vorgänger-Drehgriffschalter beim Montieren von Drehgriffschalter und Festgriff der zusätzliche Arbeitsschritt des Aufschiebens des gesonderten Festgriffes. Dieses Konzept schließt ein, dass ein Drehgriffschalter sowohl in einer Variante mit, als auch in einer Variante ohne separates Festgriffteil angeboten und eingesetzt werden kann.

Vorteilhafte Ausführungsformen sind in den abhängigen Ansprüchen definiert.

Der Drehgriff soll leichtgängig auf dem Lagerrohr drehbar ausgebildet sein. Dazu trägt eine geschlossene Lagerbasis an einem am Ende des Lagerrohres angeordneten Ring bei, der einfach und in ausreichender Präzision als rotationssymmetrisches Teil hergestellt werden kann. Es sind keine Körperkanten vorhanden, über die der Drehgriff bei der Betätigung des Drehgriffschalters gleiten müsste.

Außerdem ist die Anordnung von Kugellagern zwischen Lagerrohr und Drehgriff im axialen Bereich, wo sich die Spule zum Aufwickeln des zu betätigenden Seils befindet, eine Maßnahme zur Reibungsminimierung.

Als weitere Zielsetzung besteht die Anforderung, dass die zur erfindungsgemäßen Einrichtung gehörenden Teile einfach und kostengünstig herstellbar sind.

Das bevorzugte Ausführungsbeispiel eines erfindungsgemäßen Drehgriffschalters wird im Folgenden an Hand der Figuren beschrieben.
- Fig. 1: zeigt das bevorzugte Ausführungsbeispiel der Erfindung, bei dem das Lagerrohr und das Festgriffteil demontiert sind.
- Fig. 2: zeigt die Schnappverbindung zwischen Lagerrohr und Festgriffteil im Drehgriffschalter nach Fig. 1 in geschnittenem Zustand.
- Fig. 3: In Fig. 3 sind die Rasthaken in der Schnappverbindung nach Fig. 2 dargestellt, ohne die radial außerhalb dieser Rasthaken liegenden Bestandteile des Drehgriffschalters.
- Fig. 4: Die Fig. 4 zeigt eine Explosionsdarstellung des Schaltergehäuses mit dem Drehgriffteil und der Positioniermechanik des Drehgriffschalters nach Fig. 1.
- Fig. 5: In Fig. 5 ist eine perspektivische Ansicht der Komponenten des Drehgriffschalters bei entferntem Schaltergehäuse von der Seite der Positioniermechanik.

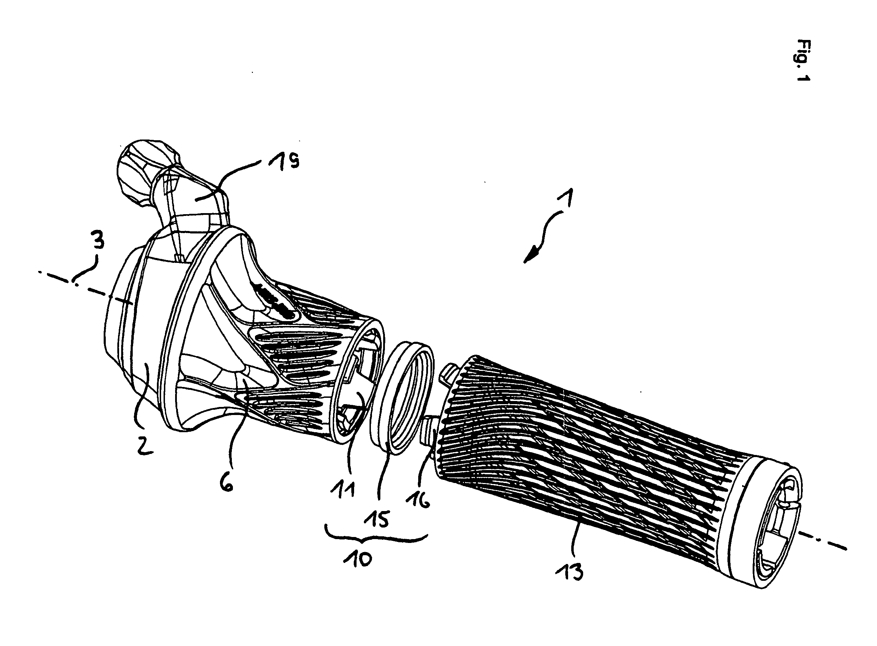

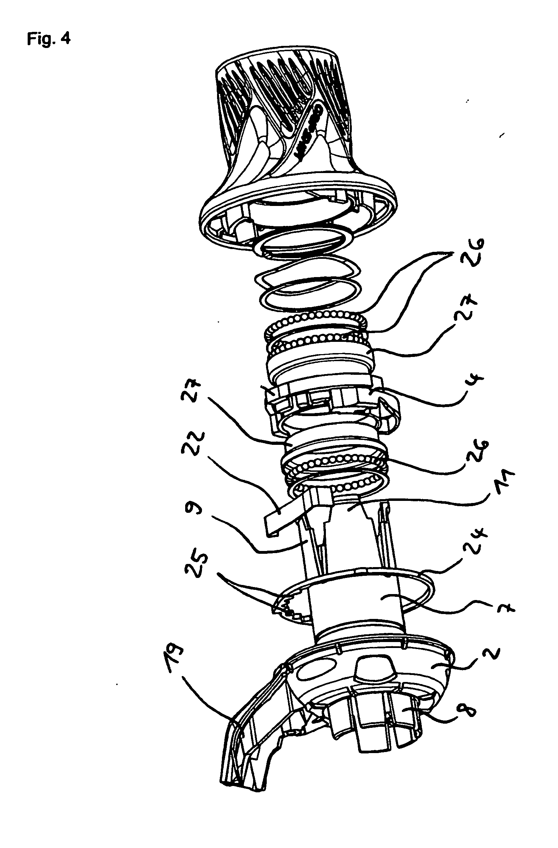

Die Fig. 1 zeigt den erfindungsgemäßen integrierten Drehgriffschalter 1 zur Betätigung eines Seilzuges 5 für das Umschalten zwischen einzelnen Gangstufen in einer Gangschalteinrichtung an einem Fahrrad. Dieser Drehgriffschalter ist mit einer Verbindungseinrichtung 10 zwischen einem Schalterbestandteil mit einem Schaltergehäuse 2 und einem Drehgriffteil 6 einerseits sowie einem Festgriffteil 13 andererseits versehen. Das Drehgriffteil 6 ist drehbar gegenüber einem nicht sichtbaren zentralen Lagerrohr 7 angeordnet. Der Drehgriffschalter ist üblicherweise auf einem Lenkerrohr montiert, das vom zentralen Lagerrohr 7 umschlossen wird. Die in einem konventionellen Drehgriffschalter vorhandenen Bestandteile gehen aus den Figuren 1 und 4 hervor. Das Schaltergehäuse beherbergt die Mechanik zum Einholen und Freigeben eines Seilzuges 5, der zu diesem Zweck auf einer Aufwickelspule 4 aufgewickelt oder freigegeben wird. Damit der Seilzug 4 nach Abschluss von Aufwickel- oder Freigabevorgängen immer exakt in einer der Positionen positioniert bleibt, die den einzelnen Gangstufen entsprechen, ist eine entsprechende Positioniereinrichtung vorhanden. Der Seilzug 5 befindet sich auf der Aufwickelspule 4 im Wesentlichen in einer Ebene senkrecht zur Lenkerrohr-Mittelachse 3. In einer Seilführung 19 wird der abgehende Seilzug 5 in die Richtung entsprechend seines weiteren Verlaufes am Fahrradrahmen bis hin zu der umzuschaltenden Gangschaltkomponente geführt. Das zentrale Lagerrohr 7 und das Schaltergehäuse 2 bilden die Lagerbasis für die beweglichen Elemente der Seileinzugsmechanik und für das Drehgriffteil 6, an dem die Betätigung des Schalters durch den Fahrradfahrer erfolgt. Im dargestellten Ausführungsbeispiel sind das Schaltergehäuse 2 und das zentrale Lagerrohr 7 an seinem nahen Ende 8 einstückig miteinander verbunden und integral ausgebildet, so dass Verbindungselemente zwischen ihnen nicht erforderlich sind. Eine um das nahe Ende 8 des zentralen Lagerrohres 7 herum angeordnete, nicht dargestellte Klemmschelle sorgt für die Fixierung des integrierten Drehgriffschalters 1 auf dem Lenkerrohr, das eine Lenkerrohr-Mittelachse 3 aufweist. Die Klemmschelle kann auch an anderen Positionen des Schalters angeordnet sein, zum Beispiel direkt im Schaltergehäuse 2 oder an einem Festgriffrohr 17 des Festgriffteils 13.

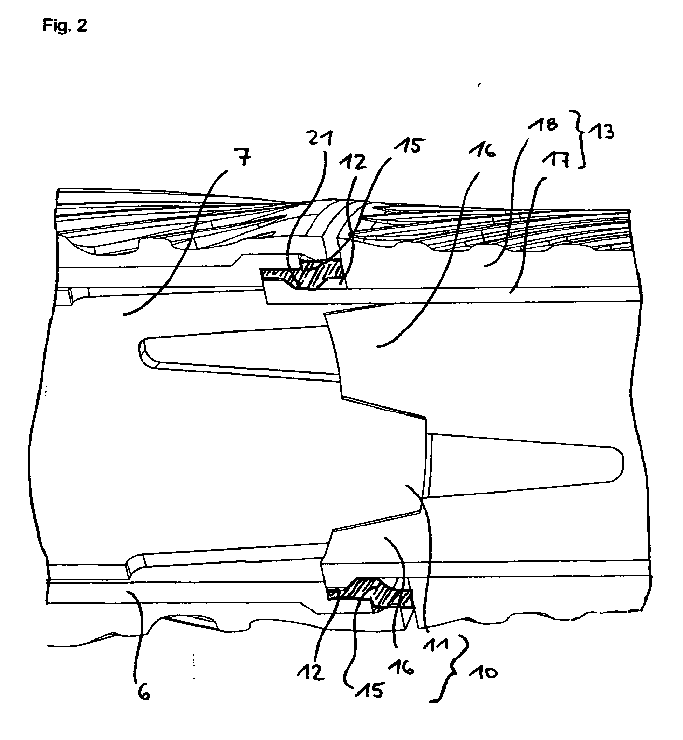

Das Festgriffteil 13 besteht aus einem radial innen angeordneten Festgriffrohr 17 mit zweitem Rasthaken 16 sowie einem radial außen befindlichen Festgriffgummi 18, wie in Fig. 2 zu sehen ist. Erfindungsgemäß gibt es zwischen dem zentralen Lagerrohr 7 und dem Festgriffteil 13 die Verbindungseinrichtung 10, wie in Fig. 1 gezeigt ist.

Die Verbindungseinrichtung 10 wird aus dem ersten Rasthaken 11 am entfernten Ende 9 des zentralen Lagerrohres 7, einem Rastenring 15 sowie einem zweiten Rasthaken 16 am Festgriffteil 13 gebildet, wie in Fig. 1 gezeigt. Die ersten Rasthaken 11 sind im Eingriff mit Gegenprofilen am Rastenring 15, um diesen in axialer Richtung gegenüber dem zentralen Lagerrohr 7 zu fixieren. Damit die ersten Rasthaken 11 in die Gegenprofile am Rastenring 15 einrasten oder aus den Gegenprofilen ausrasten können, müssen sie nach radial innen gebogen werden. Wenn sich im Zustand des am Lenkerrohr montierten Drehgriffschalters radial innerhalb vom zentralen Lagerrohr 7 das Lenkerohr befindet, kann sich ein erster Rasthaken 11 nicht nach radial innen bewegen. Folglich kann der erste Rasthaken 11 nicht aus dem Gegenprofil am Rastenring 15 ausrasten.

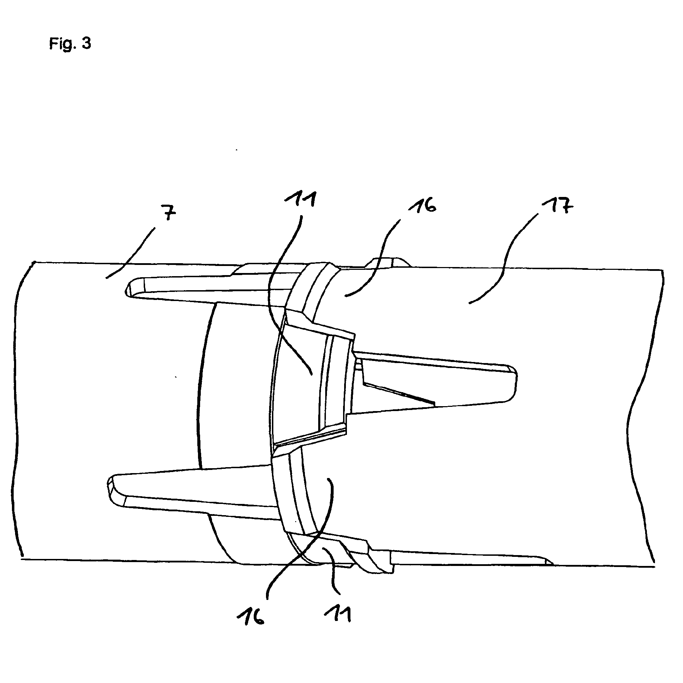

Im Rastenring 15 liegen in Umfangsrichtung abwechselnd erste Rasthaken 11 am entfernten Ende 9 des zentralen Lagerrohres 7 sowie zweite Rasthaken 16 am Festgriffrohr 17 aneinander an, wie in den Figuren 2 und 3 gezeigt wird. Die Rasthaken 11, 16 durchgreifen die Öffnung im Rastenring 15, wobei sie mit ihrem Ende in Eingriff mit umlaufenden Rastenvertiefungen 12 am Rastenring 15 sind. Die Rastvertiefungen 12 sind aus Gründen einfacher Fertigung und unkomplizierter Montage umlaufend ununterbrochen. Ein Rastenring kann als einfaches Drehteil aus Metall hergestellt werden. Die Rastvertiefungen 12 könnten in einer anderen Ausführungsform auch unterbrochen sein, vor allem dann, wenn der Festgriffteil 13 in Hinsicht auf eine Verdrehung um die Lenkerrohr-Mittelachse 3 eine definierte Winkelposition haben müsste. In axialer Richtung zwischen den zwei Rastvertiefungen 12 an den Enden des Rastenringes 15 befindet sich an der inneren Peripherie des Rastenringes eine ebenfalls umlaufende Rasterhebung 21, über die sich die ersten und zweiten Rasthaken 11, 16 beim Durchgreifen des Rastenringes 15 bewegen müssen.

Alternativ könnten zwei Rasterhebungen an den axialen Enden des Rastenringes 15 angeordnet sein, zwischen denen sich eine einzige Rastvertiefung befindet. Diese Ausführungsform ist aber bei einer Fertigung in einem Plast-Spritzgießverfahren schwieriger zu entformen.

Die Rasthaken 11, 16 haben in axialer Richtung eine V-Form, wodurch einerseits eine einfache Montage und andererseits eine in Bezug auf eine gegenseitige Verdrehung in Umfangsrichtung nahezu spielfreie Verbindung in der Verbindungseinrichtung 10 möglich ist. Die V-Form ist in Fig. 2 von innen und in Fig. 3 von außen betrachtet zu erkennen. Zwischen den ersten Rasthaken 11 und zwischen den zweiten Rasthaken 16 sind in Umfangsrichtung mehrere Schlitze vorgesehen, die sich in Richtung parallel zur Lenkerrohr-Mittelachse 3 erstrecken. Damit werden günstige Federungseigenschaften erhalten. Über die Länge der Schlitze ist die Elastizität der Rasthaken 11, 16 einstellbar.

Am entfernten Ende 9 des zentralen Lagerrohres 7 kann statt des in Fig. 1 dargestellten Festgriffteiles 13 auch ein Abschlussring angeordnet sein, der eine Begrenzung für die Verschiebebewegung des Drehgriffteiles 6 in einer Richtung parallel zur Lenkerrohr-Mittelachse 3 darstellt. Ein solcher Abschlussring kann eine geschlossene äußere Zylinderfläche an seinem Außenumfang als Lagerbasis für das Drehgriffteil 6 bieten, auf der das Drehgriffteil 6 mit einer inneren Umfangsfläche an einem axialen Ende gleitet.

Bei weiteren alternativen Ausführungsformen entfällt der Rastenring 15 zwischen zentralem Lagerrohr 7 und Festgriffrohr 17. Dann ist nur ein Satz von Rasthaken vorhanden für den Eingriff in die Gegenprofile am Gegenstück. Die Rasthaken können entweder am zentralen Lagerrohr 7 oder am Festgriffrohr 17 angeordnet sein.

Die Fig. 4 zeigt die Bestandteile der Positioniermechanik, die zwischen dem radial innen angeordneten zentralen Lagerrohr 7 und dem radial äußeren Schaltergehäuse 2 untergebracht sind. Die Positioniermechanik verfügt über eine Positionierfeder 22, die an der Aufwickelspule 4 angeordnet ist und die Aufwickelspule auch dann in der exakten Position arretiert, wenn am Seilzug 5 Zugkräfte angreifen.

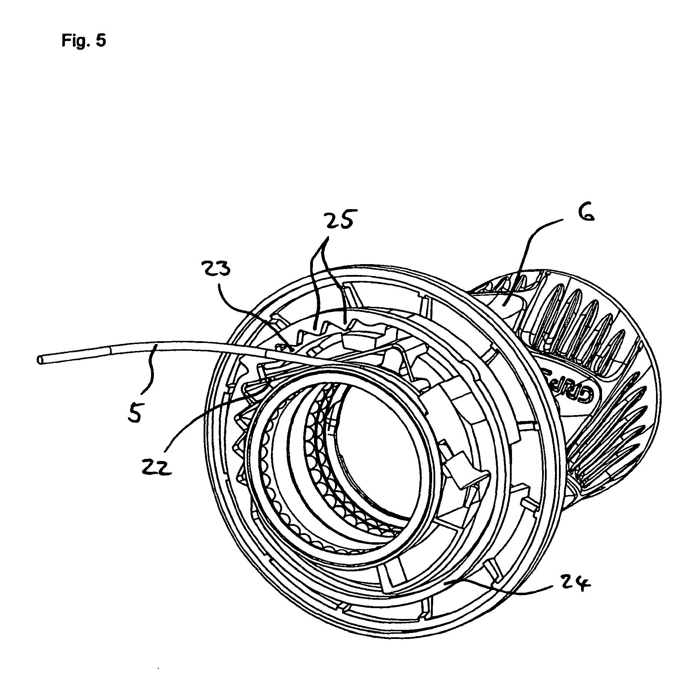

In der Fig. 5 sind die Bestandteile der Positioniermechanik zu sehen, weil das Schaltergehäuse 2 entfernt ist. In der Aufwickelspule 4 ist der Endnippel eines Seilzuges 5 eingehängt, wodurch der Seilzug 5 gemeinsam mit der Aufwickelspule 4 in der Drehrichtung im Uhrzeigersinn zum Einholen beziehungsweise zum Aufwickeln des Seiles 5 bei einer Drehbewegung in Gegen-Uhrzeigerrichtung bewegt werden. Im Gegenuhrzeigersinn ist das Seil 5 von einer nicht dargestellten Rückholfeder an der zu schaltenden Komponente mit einer Kraft beaufschlagt, zum Beispiel von einem Kettenschaltwerk. In derselben Drehrichtung verhindert eine in einem Positionierzahn 25 eines Positionierringes 24 eingreifende, an der Aufwickelspule 4 angebrachte Positionierfeder 22, eine Drehbewegung der Aufwickelspule 24. Zwischen Drehgriffteil und Aufwickelspule 4 besteht ein Verdrehspiel. Bei einer Drehbewegung des Drehgriffteiles 6 im Gegenuhrzeigersinn bewegt sich der am Drehgriffteil 6 angebrachte Ausrastfinger 23 auf die Positionierfeder 22 zu und bringt sie außer Eingriff am Positionierzahn 25. Eine nicht gezeigte, zwischen Drehgriffteil 6 und Aufwickelspule 4 in Umfangsrichtung wirkende Feder, vermittelt dem Bediener während des Aufbrauchens des Verdrehspiels einen Widerstand beim Umschalten in Freigaberichtung, bis es zum beabsichtigten Ausrasten der Positionierfeder 22 aus dem Positionierzahn 25 am Positionierring 24 und dem schrittweisen Freigeben des Seilzuges 5 kommt.

Das für den Fahrradfahrer fühlbare exakte Einrasten der Positioniermechanik wird dadurch verstärkt, dass störende Reibungskräfte auf ein Minimum reduziert sind durch die Anordnung von Kugellagern 26 zwischen der Aufwickelspule 4 und dem zentralen Lagerrohr 7. In die Aufwickelspule 4 sind von beiden axialen Seiten Lagerschalen 27 eingepresst, für die kostengünstig herstellbare Blechpressteile verwendet werden. Auf dem zentralen Lagerrohr 7 laufen die Kugeln des Kugellagers direkt ab. Da die Zugkraft am Seilzug 5 eine Querkraft an der Aufwickelspule 4 darstellt, hat die Anordnung der Kugellager 26 innerhalb der Aufwickelspule einen besonders positiven Einfluss in Hinsicht auf eine geringe Reibung.

Die exakte Funktion der Positionierung der Aufwickelspule 4 wird durch die Verwendung eines Positionierringes 24 aus einem metallischen Werkstoff gewährleistet. Außerdem verstärkt das metallische Geräusch beim Einrasten der Positionierfeder 22 in der Verzahnung am Positionierring 24 den Eindruck einer exakten Funktion.

Die Seilführung 19 ist zweckmäßigerweise nicht in einer Ebene durch die Lenkerrohr-Mittelachse angeordnet, um mit dem in der Nachbarschaft des Drehgriffschalters am Lenkerrohr montierten Bremsgriff eine Kollision mit Hebelbestandteilen zu vermeiden. Die Bremshebelbestandteile erstrecken sich meist in einem Bereich um eine Ebene durch die Lenkerrohr-Mittelachse 3.

Das Schaltergehäuse 2 kann mit einer Öffnung versehen sein, durch die hindurch ein neuer Seilzug 5 in den integrierten Drehgriffschalter 1 eingeführt wird. Diese Öffnung kann durch entsprechende Mittel verschließbar gestaltet sein, die zum Beispiel durch Elemente einer nicht gezeigten Abdeckung am Schaltergehäuse 2 gebildet sein können.

### Bezugszeichen

- 1: Integrierter Drehgriffschalter
- 2: Schaltergehäuse
- 3: Lenkerrohr-Mittelachse
- 4: Aufwickelspule
- 5: Seilzug
- 6: Drehgriffteil
- 7: zentrales Lagerrohr
- 8: nahes Ende
- 9: entferntes Ende
- 10: Verbindungseinrichtung
- 11: erster Rasthaken
- 12: Rasten-Gegenstück
- 13: Festgriffteil
- 15: Rastenring
- 16: zweite Rasthaken
- 17: Festgriffrohr
- 18: Festgriffgummi
- 19: Seilführung
- 21: Rasterhebung
- 22: Positionierfeder
- 23: Ausrastfinger
- 24: Positionierring
- 25: Positionierzahn
- 26: Kugellager
- 27: Lagerschale

## Patentansprüche

1. Integrierter Drehgriffschalter (1) zur Betätigung von Fahrradgetrieben, mit einem auf einem Lenkerrohr mit einer Lenkerrohr-Mittelachse (3) fixierten Schaltergehäuse (2), einem zentralen Lagerrohr (7) mit einem nahen Ende (8) und einem entfernten Ende (9); einem drehbar auf dem zentralen Lagerrohr (7) angeordneten und rotatorisch zu betätigenden Drehgriffteil (6), wobei sich das zentrale Lagerrohr (7) mit einer Erstreckung in Richtung der Lenkerrohr-Mittelachse (3) innerhalb vom Drehgriffteil (6) befindet;
sowie mit einer Aufwickelspule (4), die gemeinsam mit dem Drehgriffteil (6) zum Betätigen eines Seilzuges (5) gegenüber dem zentralen Lagerrohr (7) gedreht wird, wobei das nahe Ende (8) des zentralen Lagerrohres (7) mit dem Schaltergehäuse (2) axial unverschiebbar und drehfest verbunden ist;
**dadurch gekennzeichnet,**
**dass** eine Verbindungseinrichtung (10) zwischen dem entfernten Ende (9) des zentralen Lagerrohres (7) und einem Festgriffrohr (17) eines Festgriffteiles (13) zum lösbaren Verbinden eines Festgriffteiles (13) mit dem zentralen Lagerrohr (17) vorgesehen ist.

2. Integrierter Drehgriffschalter (1) nach Anspruch 1,
**dadurch gekennzeichnet,**
**dass** die Verbindungseinrichtung (10) aus einem ersten Rasthaken (11) am entfernten Ende (9) des zentralen Lagerrohres (7), einem Rastenring (15) sowie einem zweiten Rasthaken (16) am Festgriffteil (13) gebildet wird.

3. Integrierter Drehgriffschalter (1) nach Anspruch 1,
**dadurch gekennzeichnet,**
**dass** die Verbindungseinrichtung (10) aus einem ersten Rasthaken (11) am entfernten Ende (9) des zentralen Lagerrohres (7) sowie einer Rast-Vertiefung (12) am Festgriffteil (13) gebildet wird.

4. Integrierter Drehgriffschalter (1) nach Anspruch 1,
**dadurch gekennzeichnet,**
**dass** die Verbindungseinrichtung (10) aus einer Rast-Vertiefung (12) am entfernten Ende (9) des zentralen Lagerrohres (7) sowie einem zweiten Rasthaken (16) am Festgriffrohr (17) des Festgriffteils (13) gebildet wird.

5. Integrierter Drehgriffschalter (1) nach Anspruch 2,
**dadurch gekennzeichnet,**
**dass** der Rastenring (15) an der inneren Peripherie eine sich nach radial innen erhebende, umlaufende Rasterhebung (21) aufweist.

6. Integrierter Drehgriffschalter (1) nach Anspruch 5,
**dadurch gekennzeichnet,**
**dass** beim Zusammenfügen von zentralem Lagerrohr (7) und Festgriffrohr (17) sowohl der erste Rasthaken (11), als auch der zweite Rasthaken (16) in Richtung der Lenkerrohr-Mittelachse (3) über die Rasterhebung (21) geschoben werden und dabei nach radial innen gebogen werden.

7. Integrierter Drehgriffschalter (1) nach Anspruch 2,
**dadurch gekennzeichnet,**
**dass** ein Kugellager (26) im Bereich der Aufwickelspule (4) angeordnet ist zur drehbaren Lagerung der Aufwickelspule (4) gegenüber dem zentralen Lagerrohr (7).

8. Integrierter Drehgriffschalter (1) nach Anspruch 2,
**dadurch gekennzeichnet,**
**dass** ein Positionierring (24) aus einem metallischen Werkstoff im Schaltergehäuse (2) zum Eingriff einer Positionierfeder (22) angeordnet ist.

## Claims

1. Integrated rotary handle switch (1) for the actuation of bicycle gears, with a switch housing (2) fixed on a handlebar having a handlebar-tube mid-axis (3), a central bearing tube (7) having a near end (8) and a remote end (9); a rotary handle part (6) arranged rotatably on the central bearing tube (7) and to be actuated rotationally, the central bearing tube (7) being located, with an extent in the direction of the handlebar-tube mid-axis (3), inside the rotary handle part (6);
and with a winding reel (4) which, together with the rotary handle part (6), is rotated with respect to the central bearing tube (7) in order to actuate a sheave pull (5), the near end (8) of the central bearing tube (7) being connected to the switch housing (2) axially non-displaceably and fixedly in terms of rotation;
**characterized in that**
a connecting device (10) is provided between the remote end (9) of the central bearing tube (7) and a fixed handle tube (17) of a fixed handle part (13) for the releaseable connection of a fixed handle part (13) to the central bearing tube (7).

2. Integrated rotary handle switch (1) according to Claim 1,
**characterized in that**
the connecting device (10) is formed from a first latching hook (11) at the remote end (9) of the central bearing tube (7), from a catch ring (15) and from a second latching hook (16) on the fixed handle part (13).

3. Integrated rotary handle switch (1) according to Claim 1,
**characterized in that**
the connecting device (10) is formed from a first latching hook (11) at the remote end (9) of the central bearing tube (7) and from a latching depression (12) on the fixed handle part (13).

4. Integrated rotary handle switch (1) according to Claim 1,
**characterized in that**
the connecting device (10) is formed from a latching depression (12) at the remote end (9) of the central bearing tube (7) and from a second latching hook (16) on the fixed handle tube (17) of the fixed handle part (13).

5. Integrated rotary handle switch (1) according to Claim 2,
**characterized in that**
the catch ring (15) has on the inner periphery a continuous latching elevation (21) rising radially inwards.

6. Integrated rotary handle switch (1) according to Claim 5,
**characterized in that**,
when the central bearing tube (7) and fixed handle tube (17) are joined together both the first latching hook (11) and the second latching hook (16) are pushed in the direction of the handle bar-tube mid-axis (3) via the latching elevation (21) and are at the same time bent radially inwards.

7. Integrated rotary handle switch (1) according to Claim 2,
**characterized in that**
a ball bearing (26) is arranged in the region of the winding reel (4) for mounting the winding reel (4) rotatably with respect to the central bearing tube (7).

8. Integrated rotary handle switch (1) according to Claim 2,
**characterized in that**
a positioning ring (24) made from a metallic material is arranged in the switch housing (2) for the engagement of a positioning spring (22).

## Revendications

1. Poignée tournante intégrée (1) pour le changement de vitesses, pour l'actionnement de transmissions de bicyclettes, comprenant un boîtier de poignée (2) fixé sur un tube de guidon avec un axe médian de tube de guidon (3), un tube de support central (7) avec une extrémité proximale (8) et une extrémité distale (9) ; une partie de poignée tournante (6) disposée à rotation sur le tube de support central (7) et pouvant être actionnée par rotation, le tube de support central (7) étant disposé en s'étendant dans la direction de l'axe médian de tube de guidon (3) à l'intérieur de la partie de poignée tournante (6) ;
et comprenant une bobine d'enroulement (4) qui est tournée conjointement avec la partie de poignée tournante (6) pour actionner un câble de traction (5) par rapport au tube de support central (7), l'extrémité proximale (8) du tube de support central (7) étant connectée au boîtier de poignée (2) de manière immobile axialement et solidaire en rotation ;
**caractérisée en ce**
**qu'**un dispositif de connexion (10) est prévu entre l'extrémité distale (9) du tube de support central (7) et un tube de poignée fixe (17) d'une partie de poignée fixe (13) pour la connexion amovible d'une partie de poignée fixe (13) au tube de support central (7).

2. Poignée tournante intégrée (1) selon la revendication 1, **caractérisée en ce que**
le dispositif de connexion (10) est formé d'un premier crochet d'encliquetage (11) à l'extrémité distale (9) du tube de support central (7), d'une bague d'arrêt (15) ainsi que d'un deuxième crochet d'encliquetage (16) au niveau de la partie de poignée fixe (13).

3. Poignée tournante intégrée (1) selon la revendication 1,
**caractérisée en ce que**
le dispositif de connexion (10) est formé d'un premier crochet d'encliquetage (11), à l'extrémité distale (9) du tube de support central (7) ainsi que d'un renfoncement d'encliquetage (12) au niveau de la partie de poignée fixe (13).

4. Poignée tournante intégrée (1) selon la revendication 1,
**caractérisée en ce que**
le dispositif de connexion (10) est formé d'un renfoncement d'encliquetage (12) à l'extrémité distale (9) du tube de support central (7) ainsi que d'un deuxième crochet d'encliquetage (16) au niveau du tube de poignée fixe (17) de la partie de poignée fixe (13).

5. Poignée tournante intégrée (1) selon la revendication 2,
**caractérisée en ce que**
la bague d'arrêt (15) présente au niveau de la périphérie interne un rehaussement d'encliquetage (21) périphérique rehaussé radialement vers l'intérieur.

6. Poignée tournante intégrée (1) selon la revendication 5,
**caractérisée en ce que**
lors de l'assemblage du tube de support central (7) et du tube de poignée fixe (17), le premier crochet d'encliquetage (11) ainsi que le deuxième crochet d'encliquetage (16) sont poussés dans la direction de l'axe médian du tube de guidon (3) au-dessus du rehaussement d'encliquetage (21) et sont en l'occurrence courbés radialement vers l'intérieur.

7. Poignée tournante intégrée (1) selon la revendication 2,
**caractérisée en ce**
**qu'**un roulement à billes (26) est disposé dans la région de la bobine d'enroulement (4) pour le support rotatif de la bobine d'enroulement (4) par rapport au tube de support central (7).

8. Poignée tournante intégrée (1) selon la revendication 2,
**caractérisée en ce**
**qu'**une bague de positionnement (24) constituée d'un matériau métallique est disposée dans le boîtier de poignée (2) pour l'engagement d'un ressort de positionnement (22).
